# EUROPÄISCHE PATENTANMELDUNG

(11) **EP 3 104 522 A1**
(43) Veröffentlichungstag der Anmeldung: **14.12.2016**
(21) Anmeldenummer: 16161339.3
(22) Anmeldetag: 21.03.2016
(51) Int. Cl.: H02S 40/22, H02S 30/10, H02S 40/30

(54) **PHOTOVOLTAIK-MODUL**

(30) Priorität: 08.06.2015 DE 202015102947 U
(71) Anmelder: SolarWorld AG, 53175 Bonn (DE)
(72) Erfinder: Hund, Markus, 53879 Euskirchen (DE); Neuhaus, Holger, 09599 Freiberg (DE); Hahn, Harald, 01067 Dresden (DE); Wendt, Sven, 01189 Dresden (DE)
(74) Vertreter: Viering, Jentschura & Partner mbB Patent- und Rechtsanwälte

(57) **Zusammenfassung**

Die Erfindung betrifft ein Photovoltaik-Modul, aufweisend: ein Modullaminat mit mehreren miteinander elektrisch gekoppelten teilweise oder vollständigen bifazialen Photovoltaik-Zellen, welche in einem Einkapselungsmaterial eingebettet sind, wobei die mehreren Photovoltaik-Zellen derart nebeneinander angeordnet sind, dass sich zwischen jeweils zwei einander benachbarten Photovoltaik-Zellen ein Zellenspalt befindet, wobei das Modullaminat eine Vorderseiten-Oberfläche und eine Rückseiten-Oberfläche aufweist, die der Vorderseiten-Oberfläche gegenüberliegt; einen Modulrahmen, der das Modullaminat einrahmt; eine in einem Abstand zu der Rückseiten-Oberfläche des Modullaminats angeordnete und an dem Modulrahmen befestigte Modulabdeckung, welche zumindest einen Teil der Rückseiten-Oberfläche des Modullaminats abdeckt; wobei zumindest ein Teil der Modulabdeckung, welcher der Rückseiten-Oberfläche des Modullaminats zugewandt ist, einen diffusen Rückseitenreflektor bildet; wobei der diffuse Rückseitenreflektor derart angeordnet ist, dass zumindest ein Teil des Lichtes, das durch mindestens einen Zellenspalt der mehreren Zellenspalten hindurchtritt, auf die Rückseiten-Oberfläche des Modullaminats reflektiert wird.

## Beschreibung

Die Erfindung betrifft ein Photovoltaik-Modul.

Ein Photovoltaik-Modul weist üblicherweise eine Mehrzahl von miteinander elektrisch gekoppelten Photovoltaik-Zellen auf. Die Photovoltaik-Zellen sind üblicherweise innerhalb eines Photovoltaik-Moduls nebeneinander in einem Abstand zueinander angeordnet, so dass zwischen jeweils zwei einander benachbarten Photovoltaik-Zellen ein Zellenspalt entsteht, der üblicherweise mit einem Einkapselungsmaterial gefüllt ist.

Das durch die Zellenspalte hindurchtretende Licht, welches somit nicht auf die Lichteinfallsseite der Photovoltaik-Zellen trifft, trägt erheblich zu einer Leistungsverminderung eines Photovoltaik-Moduls bei.

Aus diesem Grund wurden verschiedene Entwicklungen durchgeführt, um dieses Licht nutzbar zu machen. So ist es derzeit möglich, durch Lichteinfang in den Zellenspalten die Leistungsgenerierung in einem Photovoltaik-Modul zu erhöhen. Bei einem heutigen Photovoltaik-Modul werden ungefähr 30 % des auf die Zellenspalten auftreffenden Lichts den Photovoltaik-Zellen mittels Totalreflexion an der oberen Glasabdeckung der Photovoltaik-Zellen wieder zugeführt. Hinter die Photovoltaik-Zellen gestreutes Licht geht jedoch verloren und wird in der Rückseiten-Metallisierung absorbiert.

Durch Einsatz einer weißen Verkapselung (z.B. EVA: Ethylenvinylacetat) wird versucht, diesem Problem zu begegnen. Jedoch weist der Einsatz einer solchen Verkapselung den Nachteil auf, dass der üblicherweise verwendete Laminierprozess so gesteuert werden muss, dass kein weißes Verkapselungsmaterial um die Zellkante einer jeweiligen Photovoltaik-Zelle umgreift.

Dies ist üblicherweise aufwändig und teuer.

Eine so genannte bifaziale Solarzelle ist beispielsweise in DE 10 2004 049160 B4 beschrieben.

Gemäß verschiedenen Ausführungsbeispielen wird durch eine einfache Veränderung des Herstellungsprozesses und der Rückseiten-Struktur einer Photovoltaik-Zelle die von der jeweiligen Photovoltaik-Zelle bereitgestellte elektrische Leistung erhöht.

In verschiedenen Ausführungsbeispielen wird ein Photovoltaik-Modul bereitgestellt. Das Photovoltaik-Modul kann ein Modullaminat mit mehreren miteinander elektrisch gekoppelten teilweise oder vollständigen bifazialen Photovoltaik-Zellen, welche in einem Einkapselungsmaterial eingebettet sind, aufweisen. Die mehreren Photovoltaik-Zellen sind derart nebeneinander angeordnet, dass sich zwischen jeweils zwei einander benachbarten Photovoltaik-Zellen ein Zellenspalt befindet. Das Modullaminat weist eine Vorderseiten-Oberfläche und eine Rückseiten-Oberfläche auf, die der Vorderseiten-Oberfläche gegenüberliegt. Das Photovoltaik-Modul kann ferner einen Modulrahmen aufweisen, der das Modullaminat einrahmt, sowie eine in einem Abstand zu der Rückseiten-Oberfläche des Modullaminats angeordnete und an dem Modulrahmen befestigte Modulabdeckung, welche zumindest einen Teil der Rückseiten-Oberfläche des Modullaminats abdeckt. Zumindest ein Teil der Modulabdeckung, welcher der Rückseiten-Oberfläche des Modullaminats zugewandt ist, bildet einen diffusen Rückseitenreflektor. Der diffuse Rückseitenreflektor ist derart angeordnet, dass zumindest ein Teil des Lichtes, das durch mindestens einen Zellenspalt der mehreren Zellenspalten hindurchtritt, auf die Rückseiten-Oberfläche des Modullaminats reflektiert wird.

In verschiedenen Ausführungsbeispielen kann ein Modullaminat ein Laminat mehrerer Schichten sein, beispielsweise ein Laminat folgender Komponenten:
- mehrere Photovoltaik-Zellen-Substrate (im Folgenden auch bezeichnet als Substrate);
- Einkapselungsmaterial, in welchem die mehreren Photovoltaik-Zellen-Substrate eingebettet sind;
- optional eine über der Vorderseite der Photovoltaik-Zellen-Substrate aufgebrachte erste Abdeckung (beispielsweise aus Glas) und/oder eine unterhalb der Rückseite der Photovoltaik-Zellen-Substrate aufgebrachte zweite Abdeckung (beispielsweise aus Glas).

Dadurch, dass der diffuse Rückseitenreflektor in einem Abstand zu der Rückseiten-Oberfläche des Modullaminats angeordnet ist, wird noch mehr Licht, welches durch die Zellenspalte hindurch tritt, auf die Rückseiten-Oberfläche des Modullaminat und aufgrund der diffusen Streuung auf die Rückseiten-Oberfläche der jeweiligen Photovoltaik-Zellen, reflektiert, womit der Wirkungsgrad des Photovoltaik-Moduls erhöht wird.

In einer Ausgestaltung kann die Modulabdeckung die Rückseiten-Oberfläche des Modullaminats ganzflächig abdecken. Diese Ausgestaltung ermöglicht eine sehr einfache Montage des Photovoltaik-Moduls.

In noch einer Ausgestaltung kann die Modulabdeckung von dem Modulrahmen beabstandet und mittels Abstandselementen an dem Modulrahmen befestigt sein. Hierdurch wird beispielsweise mittels der Abstandselemente die Montagestabilität weiter erhöht.

In noch einer Ausgestaltung kann der diffuse Rückseitenreflektor eine Albedo von mindestens 50%, beispielsweise von mindestens 60%, beispielsweise von mindestens 70%, beispielsweise von mindestens 80%, beispielsweise von mindestens 90%, aufweisen.

Die dem Modullaminat zugewandte Oberfläche des diffusen Rückseitenreflektors kann weiß sein, womit auf einfache Weise eine sehr hohe Reflektivität und eine hohe Albedo erzielt wird.

Zur weiteren Erhöhung der Albedo kann die dem Modullaminat zugewandte Oberfläche des diffusen Rückseitenreflektors mehrere Schichten aufweisen. So kann beispielsweise eine dem Modullaminat zugewandte erste Schicht der mehreren Schichten transparent sein und eine zweite Schicht der mehreren Schichten, welche auf der dem Modullaminat abgewandten Seite der ersten Schicht angeordnet ist, kann eine Albedo von mindestens 50%, beispielsweise von mindestens 60%, beispielsweise von mindestens 70%, beispielsweise von mindestens 80%, beispielsweise mindestens 90%, aufweisen. Weiterhin sollte die dem Modullaminat zugewandte erste Schicht der mehreren Schichten eine glatte Oberfläche aufweisen.

Die zweite Schicht kann weiß sein oder eine mikrostrukturierten (diffus streuenden) Metallfolie/ oder ein mikrostrukturiertes (diffus streuendes) Blech etc. aufweisen oder aus einem solchen bestehen.

In noch einer Ausgestaltung kann zumindest ein Teil der Innenseiten des Modulrahmens eine Albedo von mindestens 50%, beispielsweise von mindestens 60%, beispielsweise von mindestens 70%, beispielsweise von mindestens 80%, beispielsweise von mindestens 90%, aufweisen. So kann beispielsweise zumindest der Teil der Innenseiten des Modulrahmens weiß sein. Auf diese Weise kann der Wirkungsgrad des Photovoltaik-Moduls weiter erhöht werden.

In noch einer Ausgestaltung kann die Modulabdeckung mindestens eine Metallplatte (beispielsweise aus Aluminium oder einem anderen reflektierenden Metall) und/oder mindestens eine Kunststoffplatte und/oder mindestens eine Kunststofffolie aufweisen.

In noch einer Ausgestaltung kann das Photovoltaik-Modul ferner mindestens eine elektronische Komponente aufweisen, die zwischen der Rückseiten-Oberfläche des Modullaminats und der Modulabdeckung angeordnet ist. Die Modulabdeckung kann die mindestens eine elektronische Komponente auf der Rückseiten-Oberfläche des Modullaminats halten. Auf diese Weise wird anschaulich eine kraftschlüssige oder formschlüssige Befestigung der mindestens einen elektronischen Komponente mittels der Modulabdeckung erreicht. Dies stellt eine sehr kostengünstige und kompakte Möglichkeit der Halterung der mindestens einer elektronischen Komponente in dem Photovoltaik-Modul dar.

Die mindestens eine elektronische Komponente kann einen Maximum Power Point-Tracker und/oder einen Modulinverter aufweisen. Die mindestens eine elektronische Komponente kann so genannte Bypass-Dioden aufweisen. In einem solchen Fall wird das Halbzelllayout solcher Photovoltaik-Module wesentlich vereinfacht, da die Bypass-Dioden nicht mehr in die Anschlussdosen eingebracht werden müssen, sondern an beliebiger Position im Laminat angeordnet werden können. Dies spart entsprechende Leiter für den Bypassfall.

Weiterhin kann die Modulabdeckung in thermisch leitendem Kontakt mit der mindestens einen elektronischen Komponente sein.

In verschiedenen Ausführungsbeispielen wird ein Photovoltaik-Modul bereitgestellt. Das Photovoltaik-Modul kann ein Modullaminat mit mehreren miteinander elektrisch gekoppelten Photovoltaik-Zellen aufweisen, welche in einem Einkapselungsmaterial eingebettet sind. Die mehreren Photovoltaik-Zellen sind derart nebeneinander angeordnet, dass sich zwischen jeweils zwei einander benachbarten Photovoltaik-Zellen ein Zellenspalt befindet. Das Modullaminat weist eine Vorderseiten-Oberfläche und eine Rückseiten-Oberfläche auf, die der Vorderseiten-Oberfläche gegenüberliegt. Das Photovoltaik-Modul kann ferner einen Modulrahmen aufweisen, der das Modullaminat einrahmt, sowie eine in einem Abstand zu der Rückseiten-Oberfläche des Modullaminats angeordnete und an dem Modulrahmen befestigte Modulabdeckung, welche zumindest einen Teil der Rückseiten-Oberfläche des Modullaminats abdeckt. Weiterhin kann mindestens eine elektronische Komponente in dem Photovoltaik-Modul vorgesehen sein, die zwischen der Rückseiten-Oberfläche des Modullaminats und der Modulabdeckung angeordnet ist. Die Modulabdeckung kann die mindestens eine elektronische Komponente halten.

Die mindestens eine elektronische Komponente kann einen so genannten Maximum Power Point-Tracker und/oder einen Modulinverter aufweisen. Die mindestens eine elektronische Komponente kann so genannte Bypass-Dioden aufweisen. In einem solchen Fall wird das Halbzelllayout solcher Photovoltaik-Module wesentlich vereinfacht, da die Bypass-Dioden nicht mehr in die Anschlussdosen eingebracht werden müssen, sondern an beliebiger Position im Laminat angeordnet werden können. Dies spart entsprechende Leiter für den Bypassfall.

In noch einer Ausgestaltung kann die Modulabdeckung mindestens eine Metallplatte aufweisen.

Weiterhin kann die Modulabdeckung eine elektrisch leitende Verbindung zwischen der elektrischen Komponente und dem Modulrahmen herstellen.

In noch einer Ausgestaltung kann die Modulabdeckung mindestens eine Durchgangsöffnung aufweisen.

In noch einer Ausgestaltung kann die Modulabdeckung mindestens einen ersten Bereich aufweisen, der sich im Wesentlichen parallel zu der Rückseiten-Oberfläche des Modullaminats erstreckt, sowie mindestens einen zweiten Bereich, der sich nicht-parallel zu der Rückseiten-Oberfläche des Modullaminats erstreckt. Die Modulabdeckung kann in dem mindestens einen zweiten Bereich mindestens eine Durchgangsöffnung aufweisen.

Die mindestens eine Durchgangsöffnung kann derart dimensioniert und in der Modulabdeckung angeordnet sein, dass eine Luftzirkulation mittels Konvektion ermöglicht wird.

Alternativ oder zusätzlich kann das Photovoltaik-Modul ferner mindestens einen Lüfter, beispielsweise einen Querlüfter, aufweisen, der zwischen der Rückseiten-Oberfläche des Modullaminats und der Modulabdeckung angeordnet ist zum Erzeugen einer erzwungenen Luftzirkulation.

Weiterhin kann in dem Modulrahmen an jeder Seite mindestens eine Durchgangsöffnung vorgesehen sein, so dass durch diese eine Luftzirkulation ermöglicht wird.

Die Modulabdeckung kann in thermisch leitendem Kontakt mit der mindestens einen elektronischen Komponente sein.

Der diffuse Rückseitenreflektor (der eine Eigenschaft der Modulabdeckung ist) kann in einem Abstand von mehreren cm, beispielsweise in einem Bereich von ungefähr 1 cm bis ungefähr 10 cm, von der Rückseiten-Oberfläche des Modullaminats angeordnet sein.

Weiterhin kann die Spaltbreite zumindest einer Zellenspalte der mehreren Zellenspalten in einem Bereich von ungefähr 3 mm bis ungefähr 50 mm liegen.

Bei herkömmlichen Photovoltaik-Modulen war es von Vorteil, den weißen Reflektor (z.B. von Rückseitenfolien oder den weißen Druck auf die Innenseite der Rückgläser von Glas-Glas-Photovoltaik-Zellen-Modulen aufgedruckt oder eine rückseitige weiße Verkapselung) möglichst nahe an die Photovoltaik-Zellen-Rückseite zu verlegen, um wenig Licht hinter die Photovoltaik-Zelle zu streuen. Mit bifazialen Photovoltaik-Zellen gemäß verschiedenen Ausführungsbeispielen ist es nunmehr sogar günstiger, den Rückreflektor möglichst weit von der Photovoltaik-Zellen-Rückseite wegzurücken, damit ein Maximum des Lichts hinter die Solarzelle gestreut wird. In einem Photovoltaik-Modul gemäß verschiedenen Ausführungsbeispielen mit zurückgesetztem Rückseitenreflektor, wie im Folgenden noch näher erläutert wird, können beispielsweise nahezu 100 % des Lichts aus dem Zellenspalt zur Photovoltaik-Zellen-Rückseite gelenkt werden.

In noch einer Ausgestaltung kann der diffuse Rückseitenreflektor über einer weiteren noch beschriebenen rückseitigen transparenten Abdeckung gegenüber der Einkapselung in einem Abstand angeordnet sein. In noch einer Ausgestaltung kann der diffuse Rückseitenreflektor in einem Abstand von mehreren cm, beispielsweise in einem Bereich von ungefähr 1 cm bis ungefähr 10 cm, von der rückseitigen Oberfläche der zweiten transparenten Abdeckung (d.h. beispielsweise der Abdeckung, welche unterhalb der Rückseiten-Oberfläche des Substrats angeordnet ist) angeordnet sein.

Ausführungsbeispiele der Erfindung sind in den Figuren dargestellt und werden im Folgenden näher erläutert.

Es zeigen
- Figur 1: eine Querschnittansicht eines Teils einer Solarzellenmodul-Anordnung gemäß verschiedenen Ausführungsbeispielen;
- Figur 2: eine Querschnittansicht eines Teils einer Solarzellenmodul-Anordnung gemäß verschiedenen Ausführungsbeispielen;
- Figur 3A: eine Rückseitenansicht einer Solarzelle gemäß verschiedenen Ausführungsbeispielen;
- Figur 3B: eine Querschnittansicht der Solarzelle aus Figur 3A;
- Figur 4: einen vergrößerten Ausschnitt einer Rückseitenansicht einer Solarzelle gemäß verschiedenen Ausführungsbeispielen;
- Figur 5: eine Explosionsdarstellung eines Solarzellenmoduls gemäß verschiedenen Ausführungsbeispielen;
- Figur 6A: eine Rückseitenansicht eines Solarzellenmoduls gemäß verschiedenen Ausführungsbeispielen;
- Figur 6B: eine Schnittansicht des Solarzellenmoduls aus Figur 6A;
- Figur 7A: eine Rückseitenansicht eines Solarzellenmoduls gemäß verschiedenen Ausführungsbeispielen;
- Figur 7B: eine Schnittansicht des Solarzellenmoduls aus Figur 7A;
- Figur 8: eine Darstellung zur Erläuterung des Snelliusschen Gesetzes;
- Figur 9: ein Diagramm, in dem für einen diffusen Reflektor und für einen diffusen Reflektor mit Strahlaufweitung ein Anteil des gestreuten Lichtes abhängig von einem Raumwinkel dargestellt ist; und
- Figur 10: eine Querschnittansicht eines diffusen Reflektor in Form eines mehrlagigen Schichtenstapels gemäß verschiedenen Ausführungsbeispielen.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

Die hierin verwendeten physikalischen Größen, welche sich auf optische Eigenschaften beziehen, können beispielsweise wellenlängenabhängig sein, so dass diese als über den Wellenlängenbereich des sichtbaren Lichtes (beispielsweise 400 nm bis 800 nm) gemittelte Werte zu verstehen sind.

In verschiedenen Ausführungsbeispielen wird unter einer Photovoltaik-Zelle, beispielsweise einer Solarzelle, eine Einrichtung verstanden, die Strahlungsenergie von überwiegend sichtbarem Licht und infrarotem Licht (beispielsweise zumindest ein Teil des Lichts im sichtbaren Wellenlängenbereich von ungefähr 300 nm bis ungefähr 800 nm; es ist anzumerken, dass zusätzlich auch Ultraviolett(UV)-Strahlung und/oder Infrarot(IR)-Strahlung bis ca. 1150 nm umgewandelt werden kann), beispielsweise von Sonnenlicht, direkt in elektrische Energie umwandelt mittels des so genannten photovoltaischen Effekts.

In verschiedenen Ausführungsbeispielen wird unter einem Photovoltaik-Modul, beispielsweise einem Solarmodul, eine elektrisch anschlussfähige Einrichtung verstanden mit mehreren Photovoltaik-Zellen, beispielsweise mehreren Solarzellen (die miteinander in Serie und/oder parallel verschaltet sind), und optional mit einem Witterungsschutz (beispielsweise Glas), einer Einbettung und einer Rahmung verbunden sind.

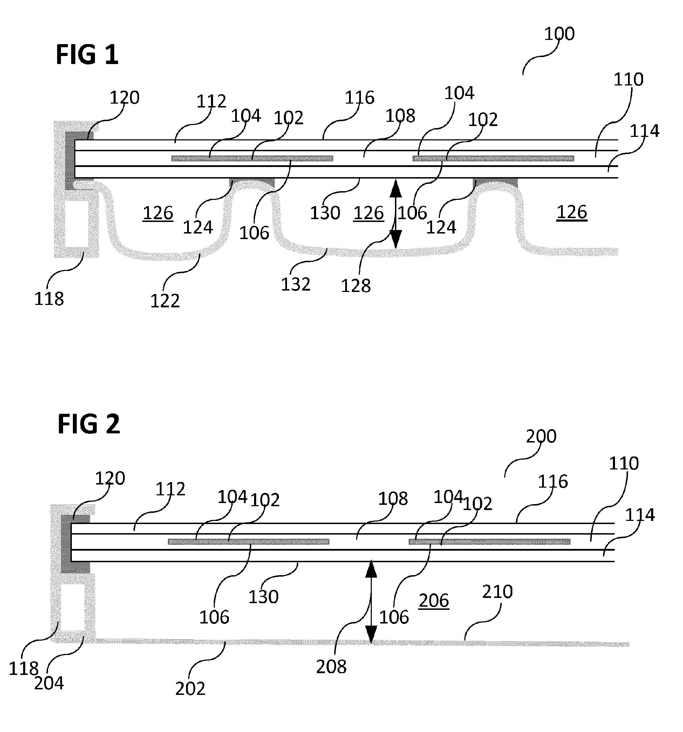

**Fig.1** zeigt eine Querschnittansicht eines Teils einer Solarzellenmodul-Anordnung 100 gemäß verschiedenen Ausführungsbeispielen.

Die Solarzellenmodul-Anordnung 100 als ein Beispiel einer Photovoltaik-Modul-Anordnung weist eine oder mehrere Solarzellen (allgemein eine oder mehrere Photovoltaik-Zellen) 102 auf, wobei ein Ausschnitt eines Randabschnitts eines solchen Solarzellenmoduls 100 in Fig.1 dargestellt ist.

Das Solarzellenmodul 100 weist eine Mehrzahl von miteinander elektrisch (in Serie und/oder parallel) gekoppelten Solarzellen 102 gemäß verschiedenen Ausführungsbeispielen auf. Jede Solarzelle 102 weist eine Vorderseiten-Oberfläche 104 und eine Rückseiten-Oberfläche 106 auf, die der Vorderseiten-Oberfläche 104 gegenüberliegt. Die Solarzellen 102 sind nebeneinander derart angeordnet, dass sich zwischen jeweils zwei einander benachbarten Solarzellen 102 ein Zellenspalt 108 befindet. Weiterhin weist das Solarzellenmodul 100 eine Einkapselung 110 (beispielsweise aus EVA) der Vorderseiten-Oberfläche und der Rückseiten-Oberfläche der Solarzellen 102 auf, welche die Solarzellen 102 im Wesentlichen vollständig umgibt (allerdings noch eine elektrische Kontaktierung der Solarzellen 102 durch die Einkapselung 110 hindurch ermöglicht). Über der Einkapselung 110 ist eine erste transparente Abdeckung 112 vorgesehen, die beispielsweise auf die Einkapselung 110 aufgeklebt ist, und welche die Vorderseiten-Oberfläche der Solarzellen 102 bedeckt. Auf der der ersten transparenten Abdeckung 112 gegenüberliegenden Seite der Einkapselung 110 ist eine zweite transparente Abdeckung 114 über der Einkapselung 110 vorgesehen, beispielsweise ebenfalls auf diese aufgeklebt, wobei die zweite transparente Abdeckung 114 die Rückseiten-Oberfläche 106 der Solarzellen 102 bedeckt. In verschiedenen Ausführungsbeispielen bilden die Solarzellen 102, die Einkapselung 110, die erste transparente Abdeckung 112 und die zweite transparente Abdeckung 114 ein Modullaminat 116.

Weiterhin weist die Solarzellenmodul-Anordnung 100 einen Montagerahmen 118 auf, der mittels einer oder mehrerer Klemmen 120 (welche mit einem Puffermaterial, beispielsweise weichem Gummi oder einer Verklebung, versehen sein können, um das Solarzellenmodul 102 nicht zu beschädigen) das Solarzellenmodul 100 an dessen Rand umgreift und damit hält. In dem Montagerahmen 118 kann zusätzlich eine als diffuser Rückseitenreflektor 122 dienende reflektierende Platte 122 (beispielsweise ein Metallblech oder eine mit einer Metallschicht beschichtete Platte, beispielsweise eine Kunststoffplatte) gehaltert sein. Es ist darauf hinzuweisen, dass die reflektierende Platte 122 zusätzlich auch eine mechanisch stabilisierende Funktion aufweisen kann. Die reflektierende Platte 122, allgemein der diffuse Rückseitenreflektor 122, ist gemäß diesen Ausführungsbeispielen außerhalb des Modullaminats 116 angeordnet. In verschiedenen Ausführungsbeispielen kann die reflektierende Platte 122 gebogen oder gewellt sein, so dass beispielsweise die reflektierende Platte 122 zusätzlich zur Randhalterung mittels des Montagerahmens 118 unterhalb der Solarzellen 102 an dem Modullaminat 116 zur verbesserten Stabilität des Solarzellenmoduls 100 befestigt sein kann (beispielsweise mittels einer Haltestruktur 124 (beispielsweise mittels eines Klebers 124)). Auf diese Weise sind anschaulich Hohlräume 126 gebildet, deren Höhe 128 (d.h. Abstand von Unterseite 130 des Modullaminats 116 bis zur Oberseite 132 der reflektierenden Platte 122) in einem Bereich liegt von ungefähr 0,5 cm bis 20 cm, beispielsweise in einem Bereich von ungefähr 1 cm bis 10 cm, beispielsweise ungefähr 3 cm.

Somit kann die reflektierende Platte 122, allgemein der diffuse Rückseitenreflektor 122, außerhalb des Modullaminats 116 des Solarzellenmoduls 100 angeordnet sein. Das Metall kann ein mattes Metall oder ein spiegelndes mit einer Prägung versehenes Metall (welches beispielsweise kleine Dellen in der Größenordnung von wenigen mm Durchmesser aufweist) sein. Weiterhin kann anstelle von Metall auch eine mit einem weißen keramischen Druck beschichtete Platte oder eine weiße Kunststoffstruktur verwendet werden. Allgemein kann in diesem Zusammenhang jedes diffus reflektierende Material für die reflektierende Platte 122 oder als (zumindest teilweise (zumindest lateral unterhalb der Zellenspalten 108)) Beschichtung der reflektierenden Platte 516 eingesetzt werden.

Allgemein ist in verschiedenen Ausführungsbeispielen ein diffuser Rückseitenreflektor 122 unterhalb der Rückseite des Solarzellenmoduls 100 vorgesehen, wobei der diffuse Rückseitenreflektor 122 derart angeordnet ist, dass zumindest ein Teil des Lichtes, das durch mindestens einen Zellenspalt 108 der Mehrzahl von Zellenspalten 108 hindurchtritt, auf die Rückseiten-Oberfläche der Solarzellen 102 (beispielsweise diffus) reflektiert wird. In verschiedenen Ausführungsbeispielen ist nur ein einziger Hohlraum gebildet, jedoch mit Stützstellen hinter jeder der Solarzellen 102.

Fig.2 zeigt eine Querschnittansicht eines Teils einer Solarzellenmodul-Anordnung 200 gemäß verschiedenen Ausführungsbeispielen.

Die Solarzellenmodul-Anordnung 200 gemäß Fig.2 ist der Solarzellenmodul-Anordnung 100 gemäß Fig.1 sehr ähnlich, weshalb im Folgenden lediglich die Unterschiede näher erläutert werden.

Die Solarzellenmodul-Anordnung 200 unterscheidet sich von der Solarzellenmodul-Anordnung 100 gemäß Fig.1 im Wesentlichen durch eine andere Ausgestaltung, Halterung und Positionierung des diffusen Rückseitenreflektors.

Auch gemäß diesen Ausführungsbeispielen ist eine als diffuser Rückseitenreflektor 202 dienende reflektierende Platte 202 (beispielsweise ein Metallblech oder eine mit einer Metallschicht beschichtete Platte oder eine weiße Folie) vorgesehen, die an dem Montagerahmen 118 gehaltert ist, allerdings nicht in der Klemme 120, sondern beispielsweise am unteren Ende 204 des Montagerahmens 118. Die reflektierende Platte 202, allgemein der diffuse Rückseitenreflektor 202, ist gemäß diesen Ausführungsbeispielen ebenfalls außerhalb des Modullaminats 116 angeordnet. In verschiedenen Ausführungsbeispielen kann die reflektierende Platte 202 gebogen oder gewellt oder auch im Wesentlichen eben sein. In verschiedenen Ausführungsbeispielen ist somit nur ein einziger Hohlraum 206 gebildet zwischen dem Modullaminat 116 und der reflektierenden Platte 202. Der Hohlraum 206 weist beispielsweise eine Höhe 208 (d.h. einen Abstand von der Unterseite 130 des Modullaminats 116 bis zur Oberseite 210 der reflektierenden Platte 202) auf in einem Bereich von ungefähr 0,5 cm bis 20 cm, beispielsweise in einem Bereich von ungefähr 1 cm bis 10 cm, beispielsweise ungefähr 3 cm.

Somit kann die reflektierende Platte 202, allgemein der diffuse Rückseitenreflektor 202, außerhalb des Modullaminats 116 angeordnet sein. Das Metall kann ein mattes Metall sein. Weiterhin kann anstelle von Metall auch eine mit einem weißen keramischen Druck beschichtete Platte oder eine Kunststofffolie eingesetzt werden. Allgemein kann in diesem Zusammenhang jedes diffus reflektierende Material für die reflektierende Platte 202 oder als (zumindest teilweise (zumindest lateral unterhalb der Zellenspalten 108)) Beschichtung der reflektierenden Platte 202 eingesetzt werden.

Allgemein ist in verschiedenen Ausführungsbeispielen auch hier ein diffuser Rückseitenreflektor 202 unterhalb der Rückseite des Modullaminats 116 vorgesehen, wobei der diffuse Rückseitenreflektor 202 derart angeordnet ist, dass zumindest ein Teil des Lichtes, das durch mindestens einen Zellenspalt 108 der Mehrzahl von Zellenspalten 108 hindurchtritt, auf die Rückseiten-Oberfläche der Solarzellen 102 (beispielsweise diffus) reflektiert wird.

Durch Verwendung einer bifazialen Solarzelle in einem Solarzellenmodul mit zwei transparenten Abdeckungen, beispielsweise einem Glas-Glas-Solarzellenmodul, kann der ursprüngliche Nachteil des Leistungsverlusts durch Lichtstreuung hinter die Solarzelle bewusst vorteilhaft genutzt werden. Um die Lichtstreuung hinter die bifaziale Solarzelle zu verstärken, kann der Hohlraum hinter den Solarzellen beispielsweise bei Dachintegration weiß gefärbt werden und das Solarzellenmodul kann transparent ausgeführt werden oder sein. Durch eine strukturierte Rückseite kann der Lichteinfang noch zusätzlich verstärkt werden, da das Licht noch weiter hinter die Solarzelle abgelenkt wird. Je tiefer der Zellenspalt zwischen den Solarzellen ist, desto mehr Licht kann von dem Solarzellenmodul eingefangen werden, da der Öffnungswinkel des Lichtstreukegels, der noch entweichen kann, immer geringer wird. Im Idealfall können nahezu 100 % des Lichts zwischen den Solarzellen genutzt werden.

Beispielsweise bei den Ausführungsbeispielen, bei denen der diffuse Rückseitenreflektor außerhalb des Modullaminats angebracht ist, können der Zellenzwischenraum und der Abstand zum Rand des Solarzellenmoduls größer sein als bei einem herkömmlichen Solarzellenmodul. So kann beispielsweise der Zellenzwischenraum in einem Bereich liegen von ungefähr 3 mm bis ungefähr 50 mm oder sogar darüber, beispielsweise in einem Bereich von ungefähr 10 mm bis ungefähr 50 mm.

Die Solarzellen 102 können bifaziale Solarzellen 102 sein, beispielsweise vollständig bifaziale Solarzellen 102 oder teilweise bifaziale Solarzellen 102.

In dem Fall, dass die Solarzellen 102 teilweise bifaziale Solarzellen 102 sind, können die Solarzellen 102 als so genannte PERC-Solarzellen (PERC: Passivated Emitter Rear Cell) eingerichtet sein, also als Solarzellen 102, deren Rückseite passiviert ist.

Es ist darauf hinzuweisen, dass in verschiedenen Ausführungsbeispielen die Photovoltaik-Zellen nicht auf PERC-Zellen beschränkt sind, sondern es können ohne weiteres auch andere vollständig oder teilweise bifaziale Photovoltaik-Zellen vorgesehen sein, um auf diese Weise auf der Photovoltaik-Zellen-Rückseite Metall, beispielsweise Silber, einzusparen.

Die Solarzelle 102 weist ein Substrat 302 auf. Das Substrat 302 kann aufweisen oder bestehen aus mindestens einer Photovoltaikschicht. Alternativ kann mindestens eine Photovoltaikschicht auf oder über dem Substrat 302 angeordnet sein. Die Photovoltaikschicht kann aufweisen oder bestehen aus Halbleitermaterial (wie beispielsweise Silizium) oder einem Verbundhalbleitermaterial (wie beispielsweise einem III-V-Verbundhalbleitermaterial (wie beispielsweise GaAs). In verschiedenen Ausführungsbeispielen kann das Silizium aufweisen oder bestehen aus einkristallinem Silizium, polykristallinem Silizium, amorphem Silizium, und/oder mikrokristallinem Silizium. In verschiedenen Ausführungsbeispielen kann die Photovoltaikschicht aufweisen oder bestehen aus einer Halbleiter-Übergangsstruktur wie beispielsweise einer pn-Übergangsstruktur, einer pin-Übergangsstruktur, einer Schottky-artigen Übergangsstruktur, und dergleichen. Das Substrat 302 und/oder die Photovoltaikschicht können/kann mit einer Grunddotierung eines ersten Leitungstyps versehen werden.

In verschiedenen Ausführungsbeispielen kann die Grunddotierung in dem Substrat 302 eine Dotierkonzentration (beispielsweise einer Dotierung des ersten Leitungstyps, beispielsweise einer p-Dotierung, beispielsweise einer Dotierung mit Bor (B)) aufweisen in einem Bereich von ungefähr 10¹³ cm⁻³ bis 10¹⁸ cm⁻³, beispielsweise in einem Bereich von ungefähr 10¹⁴ cm⁻³ bis 10¹⁷ cm⁻³, beispielsweise in einem Bereich von ungefähr 10¹⁵ cm⁻³ bis 2 * 10¹⁶ cm⁻³.

Das Substrat 302 kann aus einem Solarzellen-Wafer hergestellt werden und kann beispielsweise eine runde Form wie beispielsweise eine Kreisform oder eine Polygonform wie beispielsweise eine quadratische Form aufweisen. In verschiedenen Ausführungsbeispielen können die Solarzellen des Solarmoduls jedoch auch eine nicht-quadratische Form aufweisen. In diesen Fällen können die Solarzellen des Solarmoduls beispielsweise durch Trennen (beispielsweise Schneiden) und damit Teilen einer oder mehrerer (in ihrer Form auch als Standard-Solarzelle bezeichneten) Solarzelle(n) zu mehreren nicht-quadratischen oder quadratischen Solarzellen gebildet werden. In verschiedenen Ausführungsbeispielen kann es in diesen Fällen vorgesehen sein, Anpassungen der Kontaktstrukturen in der Standard-Solarzelle vorzunehmen, beispielsweise können Rückseitenquerstrukturen zusätzlich vorgesehen sein.

In verschiedenen Ausführungsbeispielen kann die Solarzelle 102 die folgenden Dimensionen aufweisen: eine Breite in einem Bereich von ungefähr 5 cm bis ungefähr 50 cm, eine Länge in einem Bereich von ungefähr 5 cm bis ungefähr 50 cm, und eine Dicke in einem Bereich von ungefähr 50 µm bis ungefähr 300 µm.

Die Solarzelle 102 kann eine Vorderseite (auch bezeichnet als Lichteinfallsseite) 104 und eine Rückseite 106 aufweisen.

In der Photovoltaikschicht sind gemäß verschiedenen Ausführungsbeispielen ein Basisbereich 308 sowie ein Emitterbereich 310 gebildet. Der Basisbereich 308 ist beispielsweise dotiert mit Dotierstoff eines ersten Dotierungstyps (auch bezeichnet als erster Leitungstyp), beispielsweise mit Dotierstoff vom p-Dotierungstyp, beispielsweise mit Dotierstoff der III. Hauptgruppe des Periodensystems, beispielsweise mit Bor (B). Der Emitterbereich 110 ist beispielsweise dotiert mit Dotierstoff eines zweiten Dotierungstyps (auch bezeichnet als zweiter Leitungstyp), wobei der zweite Dotierungstyp entgegengesetzt zum ersten Dotierungstyp ist, beispielsweise mit Dotierstoff vom n-Dotierungstyp, beispielsweise mit Dotierstoff der V. Hauptgruppe des Periodensystems, beispielsweise mit Phosphor (P).

In verschiedenen Ausführungsbeispielen kann in dem Emitterbereich 310 optional ein selektiver Emitter gebildet sein. Weiterhin können auf der Vorderseite 104 der Solarzelle 102 elektrisch leitfähige Stromsammelstrukturen (beispielsweise eine Metallisierung wie beispielsweise eine Silber-Metallisierung, die durch Einbrennen einer Silberpaste gebildet werden kann (die Silberpaste kann aus Silberpartikeln, Glasfrittenpartikeln und organischen Hilfsstoffen gebildet werden)) wie beispielsweise so genannte Kontaktfinger und/oder so genannte Busbars vorgesehen sein (nicht dargestellt).

In verschiedenen Ausführungsbeispielen kann optional eine Antireflexschicht (beispielsweise aufweisend oder bestehend aus Siliziumnitrid) auf die freiliegende obere Oberfläche des Emitterbereichs 310 aufgebracht sein (nicht dargestellt).

Weiterhin kann eine Mehrzahl von metallischen Lötpads (nicht dargestellt) vorgesehen sein, wobei jedes Lötpad mit dem Emitterbereich, beispielsweise mittels einer Stromsammelstruktur, elektrisch leitend verbunden ist.

In verschiedenen Ausführungsbeispielen können die Bereiche mit erhöhter Dotierstoffkonzentration dotiert werden mit einem geeigneten Dotierstoff wie beispielsweise Phosphor. In verschiedenen Ausführungsbeispielen kann der zweite Leitungstyp ein p-Leitungstyp sein und der erste Leitungstyp kann ein n-Leitungstyp sein. Alternativ kann in verschiedenen Ausführungsbeispielen der zweite Leitungstyp ein n-Leitungstyp sein und der erste Leitungstyp kann ein p-Leitungstyp sein.

Aus Gründen der einfacheren Erläuterung sind die einzelnen Elemente, die auf der Vorderseite 104 der Solarzelle 102 vorgesehen sind, in den Figuren nicht dargestellt.

Weiterhin weist die Solarzelle 102 auf ihrer Rückseite 106 eine dielektrische Schichtenstruktur (auch bezeichnet als Passivierungsstruktur) 312 auf. Die dielektrische Schichtenstruktur 312 weist beispielsweise eine Doppelschicht aus thermischem Oxid und Siliziumnitrid auf. Alternative Schichtenstrukturen sind für die dielektrische Schichtenstruktur 312 jedoch ebenfalls ohne weiteres möglich. Beispielsweise kann ein beliebiger Schichtenstapel mit Schichten mit einer oder mehreren der Verbindungen Siliziumnitrid, Siliziumoxid oder Aluminiumoxid in der dielektrischen Schichtenstruktur 312 vorgesehen sein.

Auf der dem Substrat 302 gegenüberliegenden Seite der dielektrischen Schichtenstruktur 312 ist eine Metallisierung 314 vorgesehen, wobei der Flächenanteil der Metallisierung 314 (beispielsweise aus Aluminium und/oder Silber) in einem Mittenbereich 316 des Substrates 302 größer ist als in einem Randbereich 318 des Substrates 302, der den Mittenbereich 316 zumindest teilweise (das heißt teilweise oder vollständig) umgibt. Die Metallisierung 314 weist somit in verschiedenen Ausführungsbeispielen im Wesentlichen zwei Teilbereiche auf, nämlich
- einen im Wesentlichen ganzflächigen ersten Teilbereich 320, der im Wesentlichen im Mittenbereich 316 des Substrates 302 auf der dielektrischen Schichtenstruktur 312 angeordnet ist und mittels Kontaktlöchern (auch bezeichnet als Kontaktöffnungen, beispielsweise lokale Kontaktöffnungen (LCO, local contact openings)) 322, welche sich durch die dielektrische Schichtenstruktur 312 hindurch erstrecken, mit dem Substrat 302, beispielsweise mit dem Basisbereich 308 des Substrates 302, elektrisch leitend verbunden ist (in diesem Zusammenhang ist darauf hinzuweisen, dass in verschiedenen Ausführungsbeispielen auch eine Metallisierungspaste verwendet werden kann, die eingerichtet ist, die Nitridschicht zu durchbrechen (so genannte durchfeuernde Metallisierungspaste). Damit kann auch ohne Laseröffnung ein Kontakt durch die dielektrische Schichtenstruktur hindurch hergestellt werden); sowie
- einen zweiten Teilbereich 324, der im Wesentlichen im Randbereich 318 des Substrates 302 auf der dielektrischen Schichtenstruktur 312 angeordnet ist;
   - der zweite Teilbereich 324 wird beispielsweise von Stromsammelstrukturen, die den Stromsammelstrukturen auf der Vorderseite 104 des Substrates 302 ähnlich sind, gebildet;
   - beispielsweise können in dem zweiten Teilbereich 324 elektrisch leitfähige Kontaktfinger (beispielsweise aus demselben Material, beispielsweise aus demselben Metall, wie der erste Teilbereich 320, beispielsweise aus Aluminium, oder aus einem anderen Material, beispielsweise einem anderen Metall) vorgesehen sein;
   - die Form der Stromsammelstrukturen ist grundsätzlich beliebig;
   - die Stromsammelstrukturen sind zumindest teilweise elektrisch leitend mit dem ersten Teilbereich und/oder (ebenfalls beispielsweise mittels Kontaktlöchern oder Kontaktlinien mit dem Substrat 302, beispielsweise mit dem Basisbereich 308 des Substrates 302, verbunden.

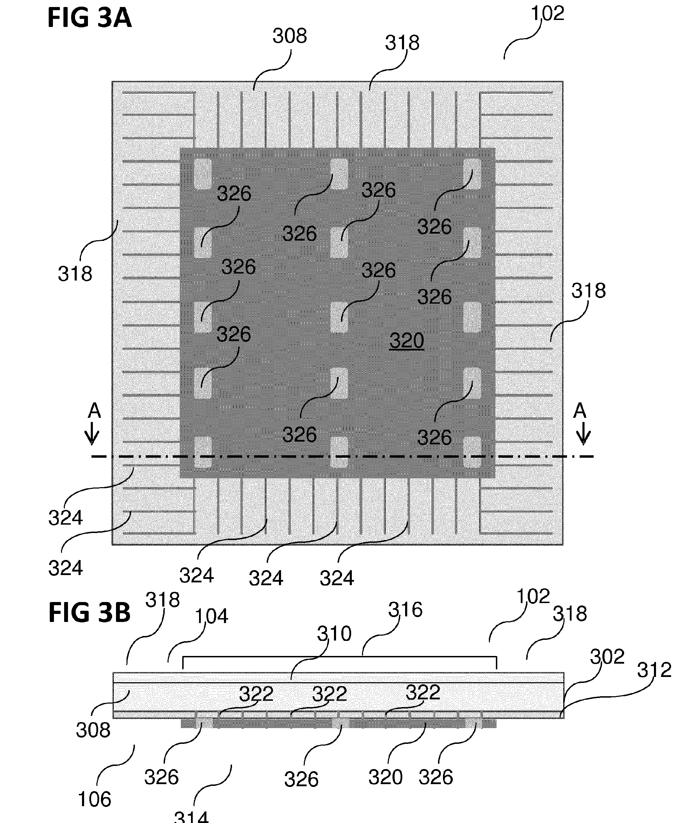

Der Flächenanteil der Metallisierung 314 in dem Mittenbereich 316 des Substrates 302 ist größer als in dem Randbereich 318 des Substrates 302, der den Mittenbereich 316 zumindest teilweise umgibt. Auch wenn in Fig.3A der Randbereich 318 den Mittenbereich 316 vollständig umgibt kann es alternativ vorgesehen sein, dass der Randbereich 318 den Mittenbereich 316 nur teilweise umgibt. Die Form und Kopplung der einzelnen Elemente der Stromsammelstrukturen können beliebig sein, beispielsweise können, wie oben beschrieben Kontaktfinger und/oder mindestens ein Metallgitter und/oder metallische Waben und/oder andere Öffnungen in der Metallfläche (mit beliebigem Oberflächenquerschnitt) vorgesehen sein.

Anschaulich ist der Randbereich 318 im Wesentlichen frei von Metall (bis auf das Metall des zweiten Teilbereichs 324 der Metallisierung 314), so dass der freiliegende Bereich der dielektrischen Schichtenstruktur 312 lichtdurchlässig ist und somit beispielsweise durch einen Zellenspalt hindurchtretendes Licht, welches beispielsweise rückseitig in irgendeiner Weise (beispielsweise diffus) zurückreflektiert wird in Richtung zu der Rückseite 104 des Substrates 302, zurück in den Basisbereich 308 des Substrates 302 gelangen kann und dort Exzitonen bilden kann, womit ein zusätzlicher Beitrag zur Erzeugung elektrischer Energie geleistet wird.

Somit wird der Wirkungsgrad der Solarzelle 102 erheblich gegenüber einer reinen Vorderseiten-Solarzelle erhöht. Anschaulich stellt die Solarzelle 102 somit eine teil-bifaziale (anders ausgedrückt partiell bifaziale) Solarzelle 102 dar. Die teil-bifaziale Solarzelle 102 weist weiterhin den Vorteil eines zusätzlich reduzierten Serienwiderstandes gegenüber einer 100 %-igen bifazialen Solarzelle auf, die aber in verschiedenen Ausführungsbeispielen ebenfalls eingesetzt werden kann.

Der Randbereich 318 kann eine Breite in einem Bereich von ungefähr 0,5 cm bis ungefähr 5 cm aufweisen, beispielsweise eine Breite in einem Bereich von ungefähr 1 cm bis ungefähr 3 cm.

Der Mittenbereich 316, der im Wesentlichen ganzflächig mit einem Metall, beispielsweise Aluminium bedeckt ist, weist eine Fläche in einem Bereich von ungefähr 213 cm² bis ungefähr 31 cm² auf, beispielsweise in einem Bereich von ungefähr 185 cm² bis ungefähr 92 cm².

Weiterhin kann eine Mehrzahl von metallischen Lötpads 326 vorgesehen sein, wobei jedes metallische Lötpad 326 mit der Metallisierung 314 elektrisch leitend verbunden ist. Die mehreren metallischen Lötpads 326 können optional die Schichtstruktur 312 durchbrechen.

In verschiedenen Ausführungsbeispielen kann der Flächenanteil der Metallisierung 314 von dem Randbereich 318 hin zu dem Mittenbereich 316 zunehmen, beispielsweise kontinuierlich oder mehrstufig.

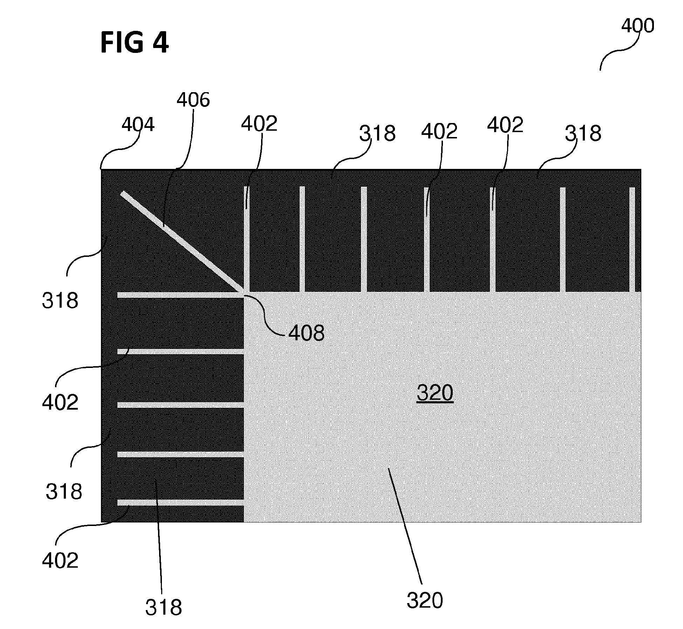

Fig.4 zeigt einen vergrößerten Ausschnitt 400 einer Rückseitenansicht einer Ecke einer Solarzelle gemäß verschiedenen Ausführungsbeispielen. Die Solarzelle kann einen ähnlichen oder identischen Aufbau haben wie die in Fig.3A und Fig.3B dargestellte Solarzelle 102, wobei jedoch bei der in Fig.4 dargestellten Solarzelle die rückseitige Stromsammelstruktur 402 in dem Randbereich 318 (also der zweite Teilbereich der Metallisierung) eine andere Form aufweist als die Stromsammelstruktur in dem Randbereich 318 in Fig.3B. So ist die rückseitige Stromsammelstruktur 402 in Fig.4 von in diesem Ausführungsbeispiel ausschließlich geraden linienförmigen Kontaktfingern 402 gebildet (in verschiedenen Ausführungsbeispielen können auch nicht gerade Kontaktfinger 402 vorgesehen sein), die mit der ganzflächigen Metallschicht 320 in dem Mittenbereich der Solarzelle 400 elektrisch leitend verbunden sind, wobei die Kontaktfinger 402 im Wesentlichen senkrecht hin zu einer jeweiligen Kante der Solarzelle verlaufen, jedoch sich nicht bis hin zu der jeweiligen Kante erstrecken. In den Ecken 404 selbst ist jeweils ein Kontaktfinger 406 als Teil der Stromsammelstruktur vorgesehen, der sich von der korrespondierenden Ecke 408 des ersten Teilbereichs 320 in gerader Linie hin zu der Ecke 404 der Solarzelle 400 erstreckt, diese jedoch nicht kontaktiert. In den Stromsammelstrukturen 324 gemäß Fig.3A sind auch winkelförmige Kontaktfinger 324 mit mehreren Teilbereichen, die jeweils in einem Winkel zueinander angeordnet sein können, vorgesehen.

Anschaulich stellt somit der Randbereich 318 der Solarzelle 102 einen bifazialen Randbereich dar, der zur Aufnahme von Licht eingerichtet ist, das in den Basisbereich 308 der Solarzelle 102 gelangen kann, um dort zur Energieerzeugung genutzt zu werden.

Auch wenn die Solarzelle 102 eine PERC-Solarzelle ist, so sind die Ausführungsformen jedoch nicht auf eine solche PERC-Solarzelle beschränkt. Die beschriebene teil-bifaziale Solarzelle kann von beliebigem Typ einer Solarzelle sein, nur mit jeweils entsprechend angepasster Rückseitenmetallisierung.

Ist beispielsweise die Rückseite des Substrates einer Solarzelle nicht vollständig passiviert wie bei einer PERC-Solarzelle, so kann zusätzlich in dem Randbereich, in dem teilweise die Rückseite des Basisbereichs freiliegt, diese zusätzlich mit einer Passivierungsschicht bedeckt sein und der zweite Teilbereich der Stromsammelstruktur kann dann auf der Passivierungsschicht angeordnet sein. Die Passivierungsschicht kann Siliziumnitrid aufweisen oder sein. Die Passivierungsschicht kann eine oder mehrere dielektrische Schichten aufweisen.

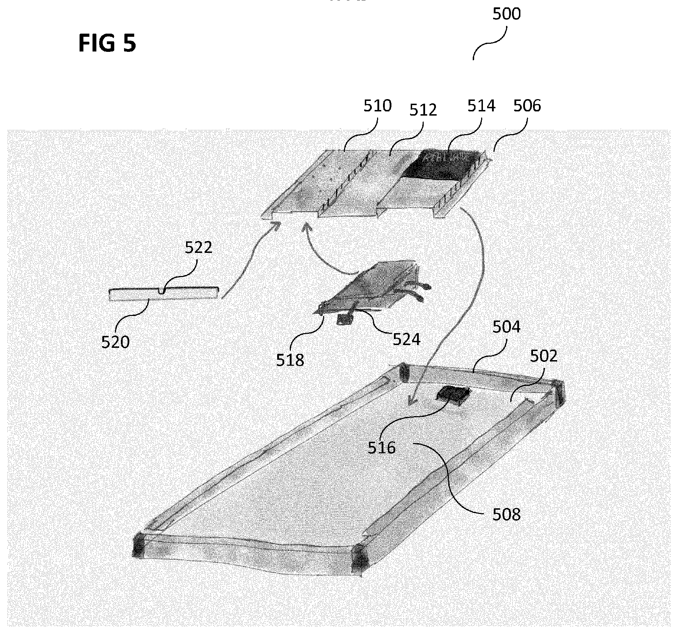

Fig.5 zeigt eine Explosionsdarstellung eines Solarzellenmoduls 500 gemäß verschiedenen Ausführungsbeispielen.

Wie in Fig.5 gezeigt weist das Solarzellenmodul 500 ein Modullaminat 502 auf, das von einem Modulrahmen 504 eingefasst und damit gehalten ist. Der Modulrahmen 504 umgibt das Modullaminat 502 lateral teilweise oder vollständig und umgreift die Seitenwände des Modullaminats 502. Weiterhin ist eine Modulabdeckung 506 vorgesehen, welche an dem Modulrahmen befestigt wird, beispielsweise angeschraubt oder aufgeklebt, oder angenietet oder in irgendeiner anderen geeigneten Weise angebracht wird. Auch wenn aus Übersichtlichkeitsgründen die Solarzellen in Fig.5 nicht dargestellt sind, so ist darauf hinzuweisen, dass das die rückseitige Abdeckung transparent ist und somit rückseitig die vollständig oder teilweisen bifazialen Solarzellen eigentlich zu sehen wären.

Das Modullaminat 502 weist, wie oben beschrieben wurde, mehrere miteinander elektrisch gekoppelten Photovoltaik-Zellen, beispielsweise Solarzellen, auf, welche in einem Einkapselungsmaterial eingebettet sind. Die mehreren Solarzellen sind derart nebeneinander angeordnet, dass sich zwischen jeweils zwei einander benachbarten Solarzellen ein Zellenspalt befindet. Das Modullaminat 502 weist eine Vorderseiten-Oberfläche und eine Rückseiten-Oberfläche 508 auf, die der Vorderseiten-Oberfläche gegenüberliegt.

Die Modulabdeckung 506 ist in einem Abstand zu der Rückseiten-Oberfläche 508 des Modullaminats 502 angeordnet und deckt zumindest einen Teil der Rückseiten-Oberfläche 508 des Modullaminats 502 ab. Die Modulabdeckung 506 kann aus einer oder mehreren Platten, beispielsweise Metallplatten und/oder Kunststoffplatten, gebildet werden. Die Modulabdeckung 506 kann mehrere unterschiedlich gebildete Bereiche aufweisen, so dass beispielsweise eine gestufte (oder beispielsweise auch wellenförmige) Struktur aufweist. So weist die Modulabdeckung 506 beispielsweise einen ersten Bereich 510, einen zweiten Bereich 512, sowie einen dritten Bereich 514 auf. In verschiedenen Ausführungsbeispielen können auch weniger oder mehr Bereiche in der Modulabdeckung 506 vorgesehen sein. Ein erster Teil der geformten Platte 506 in dem ersten Bereich 510 ist höher als ein zweiter Teil der geformten Platte 506 in dem zweiten Bereich 512, der unmittelbar neben dem ersten Bereich 510 liegt. Dies bedeutet, dass der erste Teil der Platte 506 in dem ersten Bereich 510 bei erfolgter Montage an dem Modulrahmen 504 weiter entfernt von der Rückseiten-Oberfläche 508 des Modullaminats 502 ist als der zweite Teil der Platte 506 in dem zweiten Bereich 512. Weiterhin ist der zweite Teil der geformten Platte 506 in dem zweiten Bereich 512 niedriger als ein dritter Teil der geformten Platte 506 in dem dritten Bereich 514, der unmittelbar neben dem zweiten Bereich 512 liegt. Dies bedeutet, dass der dritte Teil der Platte 506 in dem dritten Bereich 514 bei erfolgter Montage an dem Modulrahmen 504 ebenfalls weiter entfernt von der Rückseiten-Oberfläche 508 des Modullaminats 502 ist als der zweite Teil der Platte 506 in dem zweiten Bereich 512. Zwischen der montierten Modulabdeckung 506 und der Rückseiten-Oberfläche 508 des Modullaminats 502 ist somit ein Hohlraum gebildet mit unterschiedlichen Höhen (betrachtet ausgehend von der Rückseiten-Oberfläche 508 des Modullaminats 502 hin zu der jeweiligen dem Hohlraum zugewandten Oberfläche der Modulabdeckung 506.

Weiterhin ist eine elektrische Anschlussdose 516 vorgesehen, von der die von dem Photovoltaik-Modul 500 bereitgestellte elektrische Energie in Form einer elektrischen Spannung und eines elektrischen Stroms mittels einer Schnittstelle bereitgestellt wird. Die elektrische Anschlussdose 516 ist beispielsweise auf der Rückseiten-Oberfläche 508 des Modullaminats 502 aufgebracht, beispielsweise auf das Modullaminat 502 aufgeklebt. Die räumliche Platzierung der elektrischen Anschlussdose 516 ist grundsätzlich beliebig, in diesem Beispielfall jedoch unterhalb des Teils der Modulabdeckung 506 in dem zweiten Bereich 512. Die elektrische Anschlussdose 516 kann alternativ oder zusätzlich mittels der Modulabdeckung 506 auf der Rückseiten-Oberfläche 508 des Modullaminats 502 gehalten, beispielsweise geklemmt, sein.

Ferner kann das Photovoltaik-Modul 500 eine oder mehrere elektronische Komponenten 518 aufweisen, welche ebenfalls auf der Rückseiten-Oberfläche 508 des Modullaminats 502 aufgebracht sein können. Somit kann anschaulich die mindestens eine elektronische Komponente zwischen der Rückseiten-Oberfläche 508 des Modullaminats 502 und der Modulabdeckung 506 angeordnet sein. Die mindestens eine elektronische Komponente 518 kann einen Maximum Power Point-Tracker und/oder einen Modulinverter aufweisen oder in einer solchen Weise eingerichtet sein. Die mindestens eine elektronische Komponente 518 kann alternativ oder zusätzlich so genannte Bypass-Dioden aufweisen. Es können auch mehrere Bypass-Dioden parallel eingebaut sein, um die im Bypassfall umgesetzte Wärme besser und gleichmäßiger ohne Überhitzung zu verteilen, die Bypass-Dioden können auch an der Rückseitenabdeckung (beispielsweise wenn diese aus Metall besteht) thermisch leitend angebracht sein, um die Wärmeabfuhr zu gewährleisten

Die elektrische Anschlussdose 516 enthält in diesem Fall beispielsweise keine Dioden mehr und kann beispielsweise nur als reine Kontaktstruktur (Stecker) zur Photovoltaik-Zellen-Matrix ausgeführt sein.

Die räumliche Platzierung der mindestens einen elektronischen Komponente 518 ist grundsätzlich beliebig, in diesem Beispielfall jedoch unterhalb des Teils der Modulabdeckung 506 in dem ersten Bereich 510. Die mindestens eine elektronische Komponente 518 kann mittels der Modulabdeckung 506 auf der Rückseiten-Oberfläche 508 des Modullaminats 502 gehalten, beispielsweise geklemmt, sein. Anders ausgedrückt kann die Modulabdeckung 506 die mindestens eine elektronische Komponente 518 auf der Rückseiten-Oberfläche 508 des Modullaminats 502 halten.

Weiterhin kann in dem Photovoltaik-Modul 500 ein Wechselrichter-Schaltkreis (nicht dargestellt) vorgesehen sein, der in der elektrischen Anschlussdose 516 integriert sein kann oder extern von dieser vorgesehen sein kann. Entsprechend können in dem Wechselrichter-Schaltkreis die für eine DC/AC-Wandlung erforderlichen Schaltkreiskomponenten aufweisen, beispielsweise eine entsprechende Verschaltung von Dioden, Transistoren, Spulen und Kondensatoren. Zum Erhöhen der Albedo kann es ferner vorgesehen sein, dass die dem Modullaminat 502 zugewandte Oberfläche des Wechselrichter-Schaltkreises eine hohe Albedo aufweist, beispielsweise weiß ist.

Weiterhin kann eine Abdeckung 520 vorgesehen sein, welche den gebildeten Hohlraum zwischen der Modulabdeckung 506 und der Rückseiten-Oberfläche 508 des Modullaminats 502 teilweise oder vollständig abdeckt. So kann es vorgesehen sein, dass die Abdeckung 520 den ersten Teil der Modulabdeckung 506 in dem ersten Bereich 510 abdeckt, die weiteren Bereiche 512, 514 jedoch nicht. Dies ist in Fig.5 symbolisch dargestellt. Die Abdeckung kann auch eine Kabeldurchführung 522 aufweisen, durch welche beispielsweise ein Kabel 524 zum elektrischen Verbinden der mindestens einen elektronischen Komponente 518 von außerhalb des Hohlraums heraus geführt wird.

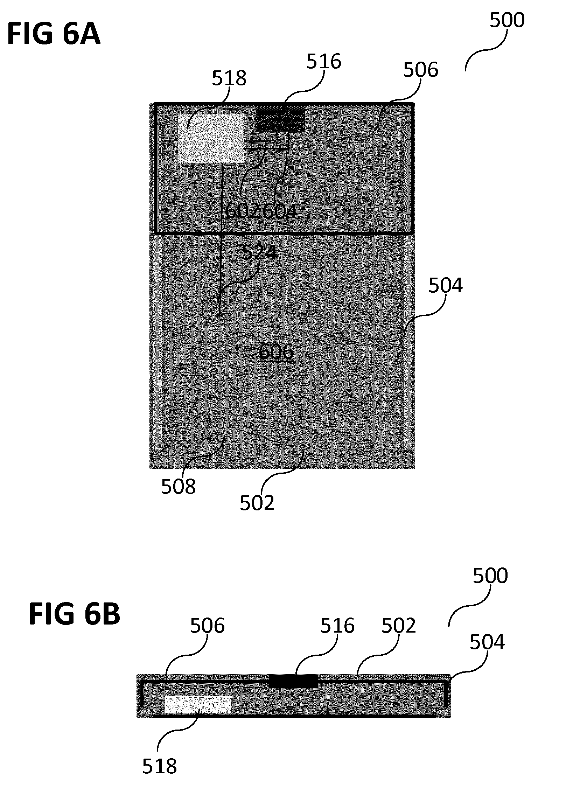

Fig.6A zeigt eine Rückseitenansicht und Fig.6B eine Schnittansicht des zusammengebauten Solarzellenmoduls 500 aus Fig.5, wobei jedoch die Modulabdeckung 506 in diesem Fall eine ebene und nicht gestufte Form aufweist.

In diesem dargestellten Beispiel ist die mindestens eine elektronische Komponente 518 ein Mikro-Wechselrichter-Schaltkreis, der mittels zweier Stromleitungen 602, 604 mit der elektronischen Anschlussdose 516 elektrisch gekoppelt ist, so dass der elektrischen Anschlussdose von dem Mikro-Wechselrichter-Schaltkreis mittels der beiden Stromleitungen 602, 604 eine Wechselspannung/ein Wechselstrom bereitgestellt wird. Die mindestens eine elektronische Komponente 518 kann, wie oben erläutert, von der Modulabdeckung 506 auf die Rückseiten-Oberfläche 508 des Modullaminats 502 gedrückt werden und auf diese Weise gehalten werden, oder sie kann alternativ oder zusätzlich auf andere Weise auf der Rückseiten-Oberfläche 508 des Modullaminats 502 befestigt sein, beispielsweise mittels eines separaten Klemmensystems einer separaten Klemmenanordnung, eines Klebers, oder mittels eines anderen Befestigungsmittels, beispielsweise mittels Schrauben, Nieten, etc.

Es ist darauf hinzuweisen, dass in diesem dargestellten Beispiel die Modulabdeckung 506 nicht die gesamte Rückseiten-Oberfläche 508 des Modullaminats 502 abdeckt. Ein nicht abgedeckter Teilbereich 606 der Rückseiten-Oberfläche 508 verbleibt freigelegt.

Ein solches Photovoltaik-Modul 500 bietet verschiedene Vorteile, beispielsweise:
- es bietet eine kompakte Bauform und somit ein positives "Look and Feel"-Gefühl für die Nutzer;
- geringe Installationskosten;
- einen hohen Grad an Sicherheit (elektrisch);
- eine sichere Kabellänge; und
- die Möglichkeit, eine standardisierte Befestigung der einzelnen Komponenten vorzusehen.

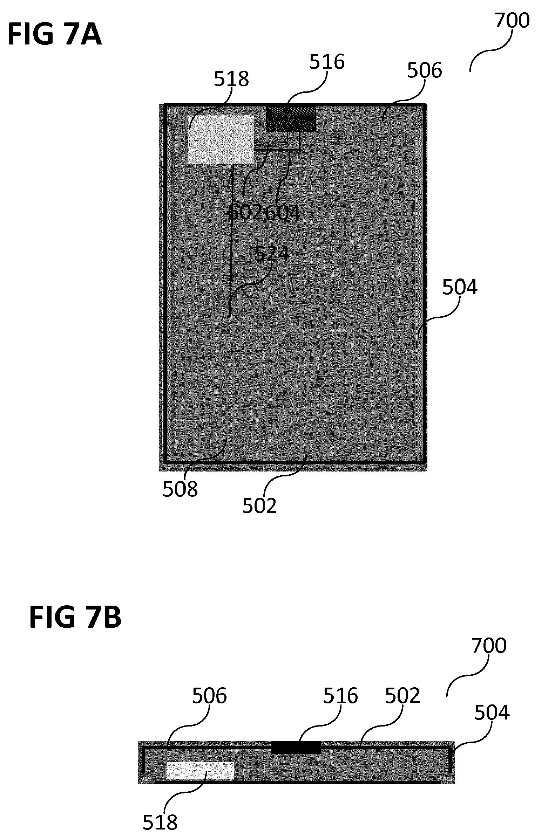

Fig.7A zeigt eine Rückseitenansicht und Fig.7B eine Schnittansicht eines zusammengebauten Solarzellenmoduls 700 gemäß verschiedenen Ausführungsbeispielen.

Das Solarzellenmodul 700, welches in Fig.7A dargestellt ist ähnelt sehr dem Solarzellenmodul 500 aus Fig.6A, wobei jedoch in diesem Beispielfall die Modulabdeckung 506 die gesamte Rückseiten-Oberfläche 508 des Modullaminats 502 bedeckt.

Die anderen Komponenten entsprechen denen des Solarzellenmoduls 500 aus Fig.6A, weshalb zur Beschreibung derselben auf obige Ausführungen verwiesen wird.

Zusätzlich zu den Vorteilen, die schon durch das Solarzellenmodul 500 aus Fig.6A erzielt werden, bietet das Solarzellenmodul 700 gemäß Fig.7A noch einen zusätzlich verbesserten Wirkungsgrad, da bei Ausgestaltung der zu der Rückseiten-Oberfläche des Modullaminats zugewandten Seite der Modulabdeckung 506 als eine hoch-reflektierende Oberfläche, und somit als eine Oberfläche mit einer hohen Albedo, noch mehr Licht, welches durch die Zellenspalte hindurch tritt, wieder auf die bifazialen Solarzellen des Solarzellenmoduls 700 rückreflektiert wird.

Die Modulabdeckung 506 kann in allen Ausführungsbeispielen mindestens eine Durchgangsöffnung aufweisen.

So kann die Modulabdeckung 506 mindestens einen ersten Bereich aufweisen, der sich im Wesentlichen parallel zu der Rückseiten-Oberfläche 508 des Modullaminats 502 erstreckt und mindestens einen zweiten Bereich aufweist, der sich nicht-parallel zu der Rückseiten-Oberfläche 508 des Modullaminats 502 erstreckt. Die Modulabdeckung 506 kann in dem mindestens einen zweiten Bereich mindestens eine Durchgangsöffnung aufweisen.

Die mindestens eine Durchgangsöffnung kann derart dimensioniert und in der Modulabdeckung 506 angeordnet sein, dass eine Luftzirkulation mittels Konvektion ermöglicht wird.

Weiterhin können in verschiedenen Ausführungsbeispielen zusätzlich Ausgestaltungen vorgesehen sein. So kann beispielsweise ein Lüfter, beispielsweise ausgestaltet als ein Querlüfter, in dem Hohlraum zwischen der Modulabdeckung 506 und der Rückseiten-Oberfläche 508 des Modullaminats 502 vorgesehen sein. Der Lüfter ist eingerichtet zum Erzeugen einer erzwungenen Luftzirkulation, wobei die aufgeheizte Luft optional einer Wärmepumpe zugeführt werden kann.

Weiterhin kann zusätzlich oder alternativ auch in dem Modulrahmen 504 an jeder Seite mindestens eine Durchgangsöffnung vorgesehen sein, so dass durch diese eine Luftzirkulation ermöglicht wird.

Allgemein kann die Modulabdeckung 506 in thermisch leitendem Kontakt mit der mindestens einen elektronischen Komponente 518 sein.

In verschiedenen Ausführungsbeispielen kann der diffuse Rückseitenreflektor, also beispielsweise die "Innenseite" der Modulabdeckung 506, in einem Abstand von mehreren cm, beispielsweise in einem Bereich von ungefähr 1 cm bis ungefähr 10 cm, von der Rückseiten-Oberfläche 508 des Modullaminats 502 angeordnet sein.

Durch Verbesserung der Luftzirkulation in dem Photovoltaik-Modul kann allgemeinen der Wirkungsgrad der Solarzellen und/oder des Wechselrichter-Schaltkreises erhöht und die Lebensdauer elektronischer Komponenten erhöht werden.

Weiterhin kann das oder können die Kabel in einem Winkel von 45° angeordnet sein. Auf diese Weise könnte Kabelmaterial eingespart werden.

Weiterhin können beispielsweise die beiden Stromleitungen 602, 604 Kabel sein, welche mit einem Gummimantel als Schutzmantel umgeben sind.

Weiterhin kann es in verschiedenen Ausführungsbeispielen vorgesehen sein, dass der diffuse Rückseitenreflektor aus einer Mehrzahl von übereinander gestapelten Schichten gebildet wird. Anschaulich entspricht dies einem mehrlagigen Reflektoraufbau zur Erhöhung des Energieertrages von einem Photovoltaik-Modul mit teilweise oder vollständig bifazialen Photovoltaik-Zellen. Anschaulich kann bei einem geeignet gewählten Schichtenstapel die diffuse Streuung des durch die Zellenspalten hindurchtretenden Lichts erhöht werden.

So kann allgemein beispielsweise eine dem Modullaminat zugewandte erste Schicht der mehreren Schichten eines Schichtenstapels transparent sein und eine zweite Schicht der mehreren Schichten, welche auf der dem Modullaminat abgewandten Seite der ersten Schicht angeordnet ist, kann eine Albedo von mindestens 50%, beispielsweise von mindestens 60%, beispielsweise von mindestens 70%, beispielsweise von mindestens 80%, beispielsweise von mindestens 90%, aufweisen. So kann beispielsweise die zweite Schicht weiß sein oder eine mikrostrukturierten (diffus streuenden) Metallfolie/ oder ein mikrostrukturiertes (diffus streuendes) Blech etc. aufweisen oder aus einem solchen bestehen.

Anders ausgedrückt wird in verschiedenen Ausführungsbeispielen die lichtstreuende Oberfläche des Untergrundes mit einer Schicht hoher Brechzahl beschichtet, beispielsweise mit einer Schicht einer Brechzahl von mindestens 1.3, beispielsweise von mindestens 1.5

Der Brechzahlübergang zur transparenten Beschichtung über der lichtstreuenden Schicht, , weitet dabei den Lichtstreukegel abhängig von der Brechzahl auf und erhöht damit den Anteil des Lichts, das hinter die Solarzellen gestreut wird. Die hochbrechende Beschichtung kann sowohl organisch oder anorganisch ausgeführt sein. Beispielsweise kann eine modulinnenseitig im Wesentlichen ebene Glasplatte mit einer modulaußenseitigen metallbeschichteten diffus streuenden Wellenstruktur oder eine außen weiß beschichtete Glasplatte mit im Wesentlichen planparallelen Oberflächen eingesetzt werden.

Allgemein kann es in verschiedenen Ausführungsbeispielen vorgesehen sein, eine hochbrechende, transparente Schicht auf eine hinter bifazialen (teilweise oder vollständig) Photovoltaik-Zellen befindlichen lichtstreuenden Schicht zur Erhöhung des auf die Rückseite von einem bifazialen Photovoltaik-Modul gestreuten Lichts, aufzubringen.

Ferner kann mittels einer zweiten Schicht eines mehrlagigen Schichtenstapels rauhe, diffus streuende Beschichtungen vor Verschmutzung oder diffus streuende Metalloberflächen vor Korrosion und Abrieb geschützt werden.

Im Folgenden werden verschiedene Ausführungsformen für einen mehrlagigen Schichtenstapel, also einem mehrlagigen Reflektoraufbau näher beschrieben.

Generell gilt: Je flacher Licht gestreut wird, desto mehr Licht erreicht die Rückseite der Solarzelle. Die Streuwinkel idealer Lambertscher Reflektoren sind jedoch naturgemäß festgelegt und ein erheblicher Teil des Lichts wird wieder aus den Zellzwischenräumen aus dem Modul hinausgestreut. Um diese Verluste zu verringern werden die Solarzellen in größerem Abstand über dem Rückreflektor installiert - womit sich der Öffnungswinkel des Streukegels verringert und die Verluste vermindert werden. Diese Lösung ist teuer da der Abstand von Laminat und Rückreflektor vergrößert werden muss wodurch der Modulrahmen verbreitert werden muss.

In verschiedenen Ausführungsbeispielen werden die Lichtstreueigenschaften des Rückreflektors gezielt beeinflusst, um den Streukegel des Lichts abzuflachen und mehr Licht hinter die Photovoltaik-Zellen zu führen.

Zur quantitativen Beschreibung des durch Lichtstreuung reflektierten und eingefangenen Lichts wird angenommen, dass alles Licht unabhängig von der Wellenlänge und vollständig diffus von der Rückseite zurückgestreut wird - es gilt somit das Lambert'sche Gesetz.

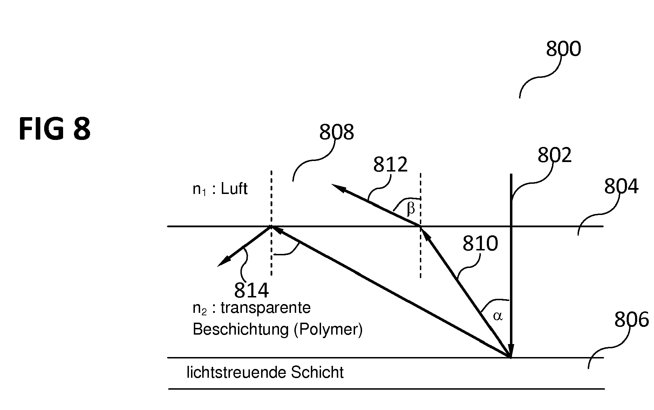

**Fig.8** zeigt eine Darstellung 800 zur Erläuterung des Snelliusschen Gesetzes, wobei ein einfallender Lichtstrahl 802 durch eine transparente Beschichtung 804 (die einen Brechungsindex n₂ aufweist) hindurchtritt und an einer lichtstreuenden Schicht 806 diffus gestreut wird zurück unter einem ersten Winkel α in Richtung der transparenten Beschichtung 804. An der Schnittstelle zwischen der transparenten Beschichtung 804 und Luft 808 (die einen ersten Brechnungsindex n₁ aufweist) tritt der gestreute Lichtstrahl 810 unter einem zweiten Winkel β aus der transparenten Beschichtung 804 aus (austretender Lichtstrahl 812) oder wird totalreflektiert wieder zurück in die transparente Beschichtung 804 (totalreflektierter Lichtstrahl 814). Der so genannte Grenzwinkel δ für die Totalreflexion ergibt sich zu δ = n₂ / n₁.

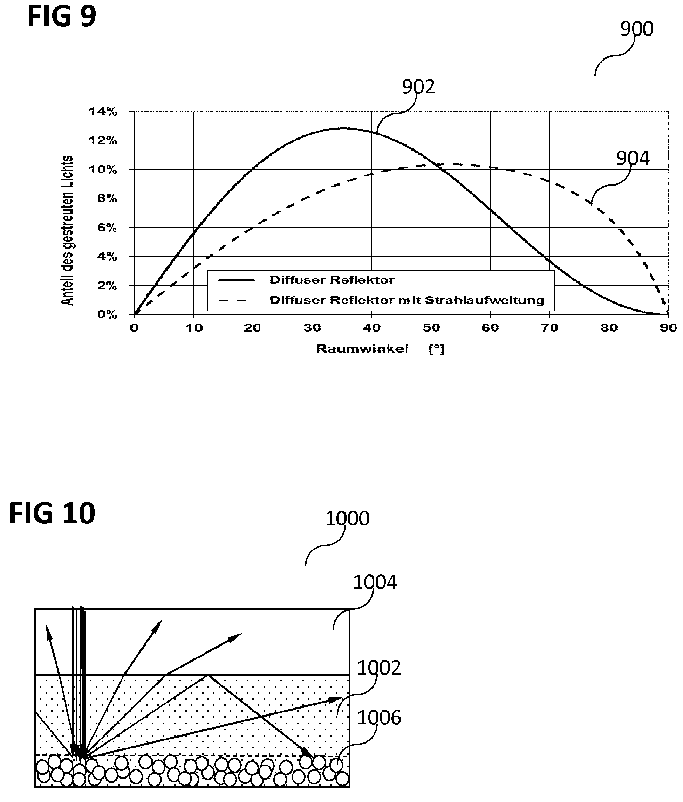

Die Verteilung des aus dem mehrlagigen Aufbau austretenden Lichts ist stark zu größeren, von der Schichtnormalen, abweichenden Winkeln verschoben. Wird eine entsprechende Schichtstruktur als Rückreflektor auf dem Boden eines Solarfeldes mit bifazialen Photovoltaik-Modulen oder als rückseitige Modulabdeckung eines Photovoltaik-Moduls, wie sie oben beschrieben wurde, aufgebracht, trifft unabhängig von der Richtung des einfallenden Lichts (Sonnenstandes) mehr Licht auf die Modulrückseite (siehe Diagramm 900 in **Fig.9****,** welches eine erste Intensitätsverteilung 902 für einen diffusen Reflektor und eine zweite Intensitätsverteilung 904 für einen diffusen Reflektor mit Strahl Aufweitung darstellt).

In verschiedenen Ausführungsbeispielen kann ein solcher Schichtenstapel (beispielsweise ein Schichtenstapel 1000, wie in **Fig.10** dargestellt) mindestens zwei Schichten aufweisen oder aus mindestens zwei Schichten bestehen, beispielsweise einer lichtstreuenden Schicht 1006 und einer transparenten Beschichtung mit nahezu ebener Oberfläche 1002. Idealerweise weisen beide Schichten 1002, 1006 die gleiche oder ähnliche Materialzusammensetzung auf, lediglich die untere lichtstreuende Schicht 1006 kann noch mit zusätzlichen Lichtstreukörpern gefüllt sein. Das Grundmaterial (auch bezeichnet als Matrixmaterial) der lichtstreuenden Schicht 1006 sollte eine gute Anbindung an die Lichtstreukörper bieten. Idealerweise wird Licht einer Wellenlänge von ungefähr 400 nm bis ungefähr 1200 nm nahezu vollständig reflektiert. Die transparente Deckschicht 1002 sollte eine möglichst glatte Oberfläche ausbilden, eine hohe Brechzahl aufweisen, leicht zu reinigen bzw. wenig verschmutzend und lichtstabil aufgebaut sein.

Die Trennung von Lichtstreueigenschaft und Oberflächeneigenschaften ist zudem vorteilhaft, da eine monolithische Schicht meist nur bedingt allen Anforderungen in idealer Weise genügen kann.

Reflektoren können aus unterschiedlichen Polymerschichten aufgebaut werden die unterschiedliche Aufgaben erfüllen (UV-Schutz, Witterungsstabilität) und z.B. eine Lage zur Erhöhung der mechanischen Stabilität z.B. mit eingelegten Glasfasern. Durch die transparente Deckschicht 1002 ist zudem die Verschmutzungsgefahr des Lichtstreukörpers geringer, bzw. die Reinigung vereinfacht, da keine anorganischen Partikel an der Oberfläche liegen. Als Lichtstreukörper 1006 sind in verschiedenen Ausführungsbeispielen beispielsweise hochbrechende Materialien wie Titanoxid, Calciumcarbonat oder aber z.B. Polymer-Hohlkugeln, bzw. geschäumte Polymerschichten aber auch aufgeraute Metallschichten oder Metallpulver vorgesehen. Die meisten Polymere weisen sehr ähnliche Brechzahlen in einem Bereich von 1.5 auf. Deshalb sind in verschiedenen Ausführungsbeispielen auch Kombinationen unterschiedlicher Polymere vorgesehen, beispielsweise da bestimmte Polymere, die zur Kristallisation neigen, auch ohne Füllstoffe lichtstreuend sind. So könnte z.B. Polyethylen mit einer Schicht eines transparenten Polymers versehen werden.

Auch in einem solchen Ausführungsbeispiel würde ein doppelter Schichtaufbau gewählt. Beispielsweise kann ein weißes Basismaterial (das anschaulich der lichtstreuenden Schicht 1002 entspricht) mit einer transparenten Glasur (das anschaulich der transparenten Schicht 1004 entspricht) versehen werden, oder eine doppellagige Glasur eingesetzt werden. In verschiedenen Ausführungsbeispielen kann ein strukturiertes Blech (mit nur sehr kleinen Strukturen von beispielsweise kleiner oder gleich 1 mm mit einer transparenten Glasur) vorgesehen sein. Anorganische Glasuren besitzen zudem den Vorteil dass hier auch Materialien mit höheren Brechzahlen und entsprechend größerem Lichteinfang zur Verfügung stehen.

Der Schichtenstapel kann auch mehr als zwei Schichten aufweisen, beispielsweise drei, vier, fünf, sechs oder sogar mehr übereinandergestapelt angeordnete Schichten.

Idealerweise sollte die Brechzahl des Mediums, mit dem der jeweilige Streukörper abgedeckt wird, möglichst hoch sein. Übliche Polymere weisen nur mittlere Brechzahlen in einem Bereich von ungefähr 1.5 auf - eine entsprechende Erhöhung wäre möglich aber teuer.

Es kann jedoch für mehrlagige Aufbauten mit unterschiedlichen Brechzahlen gezeigt werden, dass nur die Differenz der Brechzahlen zwischen lichtstreuender Schicht und Luft relevant ist. Die darüber befindlichen Schichten mit anderer Brechzahl verändern die Streuwinkel des austretenden Lichts nicht. Dies ermöglicht den Einsatz von teuren in der Brechzahl angepassten Materialien, da diese nur in wenige µm starken Schichten auf tragende Standardpolymere aufgebracht werden müssen.

Drei grundlegende Aufbauten sind in verschiedenen Ausführungsbeispielen vorgesehen.
1. Bringt man auf die transparente Schicht eines üblichen Polymers eine weitere Schicht geringerer Brechzahl (ca. 1.3) auf, vermindert dies die Reflexion von Licht beim Eintritt in den Mehrschichtaufbau hinein und auch wieder hinaus. Beispielsweise kann ein solcher Aufbau aus einer dicken mechanisch belastbaren transparenten Schicht mit mittlerer Brechzahl bestehen. Diese wird auf der Unterseite weiß beschichtet und auf der Oberseite mit einem niedrigbrechenden Polymer abgedeckt. In diesem Fall können z.B. ETFE oder verwandte Polymere - die zudem sehr witterungs- und UV-stabil sind und nicht verschmutzen, eingesetzt werden.
2. ferner kann eine tragende Schicht mittlerer Brechzahl vorgesehen sein, unter der eine dünne hochbrechende Schicht angeordnet wird, unter der sich erst das Lichtstreumedium befindet. Dies würde den Austrittskegel des Lichts nochmals weiter abflachen.
3. Die Kombination aus 1. und 2. Von unten betrachtet (anders ausgedrückt betrachtet bei Montage der Photovoltaik-Module vom Boden aus): Lichtstreuende Schicht, hochbrechende Beschichtung, tragende Schicht mittlerer Brechzahl (Standardpolymer), niedrig brechende Abschlussschicht.

## Patentansprüche

1. Photovoltaik-Modul, aufweisend:
• ein Modullaminat mit mehreren miteinander elektrisch gekoppelten teilweise oder vollständigen bifazialen Photovoltaik-Zellen, welche in einem Einkapselungsmaterial eingebettet sind, wobei die mehreren Photovoltaik-Zellen derart nebeneinander angeordnet sind, dass sich zwischen jeweils zwei einander benachbarten Photovoltaik-Zellen ein Zellenspalt befindet, wobei das Modullaminat eine Vorderseiten-Oberfläche und eine Rückseiten-Oberfläche aufweist, die der Vorderseiten-Oberfläche gegenüberliegt;
• einen Modulrahmen, der das Modullaminat einrahmt;
• eine in einem Abstand zu der Rückseiten-Oberfläche des Modullaminats angeordnete und an dem Modulrahmen befestigte Modulabdeckung, welche zumindest einen Teil der Rückseiten-Oberfläche des Modullaminats abdeckt;
• wobei zumindest ein Teil der Modulabdeckung, welcher der Rückseiten-Oberfläche des Modullaminats zugewandt ist, einen diffusen Rückseitenreflektor bildet;
• wobei der diffuse Rückseitenreflektor derart angeordnet ist, dass zumindest ein Teil des Lichtes, das durch mindestens einen Zellenspalt der mehreren Zellenspalten hindurchtritt, auf die Rückseiten-Oberfläche des Modullaminats reflektiert wird.

2. Photovoltaik-Modul gemäß Anspruch 1,
wobei die Modulabdeckung die Rückseiten-Oberfläche des Modullaminats ganzflächig abdeckt.

3. Photovoltaik-Modul gemäß Anspruch 1 oder 2,
wobei die Modulabdeckung von dem Modulrahmen beabstandet und mittels Abstandselementen an dem Modulrahmen befestigt ist.

4. Photovoltaik-Modul gemäß einem der Ansprüche 1 bis 3,
wobei der diffuse Rückseitenreflektor eine Albedo von mindestens 50%, vorzugsweise mindestens 80%, aufweist.

5. Photovoltaik-Modul gemäß einem der Ansprüche 1 bis 4,
wobei die dem Modullaminat zugewandte Oberfläche des diffusen Rückseitenreflektors mehrere Schichten aufweist.

6. Photovoltaik-Modul gemäß Anspruch 5,
• wobei eine dem Modullaminat zugewandte erste Schicht der mehreren Schichten transparent ist; und
• wobei eine zweite Schicht der mehreren Schichten, welche auf der dem Modullaminat abgewandten Seite der ersten Schicht angeordnet ist, eine Albedo von mindestens 50%, vorzugsweise mindestens 80%, aufweist.

7. Photovoltaik-Modul gemäß Anspruch 6,
wobei die zweite Schicht weiß ist oder eine mikrostrukturierten Metallfolie oder ein mikrostrukturiertes Blech aufweist oder aus einem solchen bestehen.

8. Photovoltaik-Modul gemäß einem der Ansprüche 1 bis 7,
wobei zumindest ein Teil der Innenseiten des Modulrahmens eine Albedo von mindestens 50%, vorzugsweise mindestens 80%, aufweist.

9. Photovoltaik-Modul gemäß einem der vorangehenden Ansprüche, zusätzlich aufweisend:
• mindestens eine elektronische Komponente, die zwischen der Rückseiten-Oberfläche des Modullaminats und der Modulabdeckung angeordnet ist,
• wobei die Modulabdeckung die mindestens eine elektronische Komponente hält.

10. Photovoltaik-Modul gemäß Anspruch 9,
wobei die mindestens eine elektronische Komponente einen Maximum Power Point-Tracker und/oder einen Modulinverter und/oder eine oder mehrere Bypass-Dioden aufweist.

11. Photovoltaik-Modul gemäß einem der Ansprüche 9 oder 10, wobei die Modulabdeckung mindestens eine Metallplatte
aufweist und die Modulabdeckung eine elektrisch leitende Verbindung zwischen der elektrischen Komponente und dem Modulrahmen herstellt.

12. Photovoltaik-Modul gemäß einem der Ansprüche 1 bis 11,
wobei in dem Modulrahmen an jeder Seite mindestens eine Durchgangsöffnung vorgesehen ist, so dass durch diese eine Luftzirkulation ermöglicht wird.

13. Photovoltaik-Modul gemäß einem der Ansprüche 9 bis 12,
wobei die Modulabdeckung in thermisch leitendem Kontakt mit der mindestens einen elektronischen Komponente ist.

14. Photovoltaik-Modul gemäß einem der Ansprüche 1 bis 13,
wobei der diffuse Rückseitenreflektor in einem Abstand von mehreren cm, vorzugsweise in einem Bereich von ungefähr 1 cm bis ungefähr 10 cm, von der Rückseiten-Oberfläche des Modullaminats angeordnet ist.

15. Photovoltaik-Modul gemäß einem der Ansprüche 1 bis 14,
wobei die Spaltbreite zumindest einer Zellenspalte der mehreren Zellenspalten in einem Bereich ist von ungefähr 3 mm bis ungefähr 50 mm.
